# EUROPÄISCHE PATENTANMELDUNG

(11) **EP 1 524 381 A2**
(43) Veröffentlichungstag der Anmeldung: **20.04.2005**
(21) Anmeldenummer: 04022928.8
(22) Anmeldetag: 27.09.2004
(51) Int. Cl.: E04D 13/03, E04B 7/16

(54) **Hausdach**

(30) Priorität: 16.10.2003 DE 20316077 U
(71) Anmelder: Wittmann, Robert, 86368 Hirblingen (DE)
(72) Erfinder: Wittmann, Robert, 86368 Hirblingen (DE)
(74) Vertreter: Repkow, Ines, Dr. Dipl.-Ing.

(57) **Zusammenfassung**

Es wird ein Hausdach mit einem Dachfenster beschrieben. Das beschriebene Hausdach zeichnet sich dadurch aus, daß es einen schwenkbaren Deckel (12) aufweist, welcher derart angeordnet und schwenkbar ist, daß er im nach unten geschwenkten Zustand von außen über dem Dachfenster (11) zu liegen kommt, und vom Dachfenster (11) weg nach oben schwenkbar ist.

## Beschreibung

Die vorliegende Erfindung betrifft eine Vorrichtung gemäß dem Oberbegriff des Patentanspruchs 1, d.h. ein Hausdach mit einem Dachfenster.

In letzter Zeit werden vermehrt Häuser mit besonders geringem Heizwärmebedarf gebaut. Zu den Häusern mit besonders geringem Heizwärmebedarf gehören die sogenannten Niedrigenergiehäuser und die sogenannten Passivhäuser, wobei die Passivhäuser einen noch geringeren Heizwärmebedarf als die Niedrigenergiehäuser aufweisen und im Idealfall keine eigene Heizung mehr benötigen.

Der niedrige Heizwärmebedarf von Niedrigenergiehäusern und Passivhäusern kommt dadurch zustande, daß sie besonders gut isoliert sind und relativ große Fensterflächen aufweisen.

Große Fensterflächen ermöglichen es, daß die Sonneneinstrahlung zur Heizung des Hauses genutzt werden kann. Andererseits weisen Fenster aber im allgemeinen schlechtere Wärmeisolationseigenschaften auf als fensterlose Wände, so daß die Fenster auch nicht zu groß sein dürfen. Problematisch ist ferner, daß das Energiesparpotential sehr stark von der Lage des Hauses abhängt: je länger und intensiver das Haus von der Sonne bestrahlt wird, desto geringer ist der Heizwärmebedarf.

Der vorliegenden Erfindung liegt daher die Aufgabe zugrunde, eine Möglichkeit zu finden, durch welche einerseits die vorhandene Sonneneinstrahlung optimal genutzt werden kann, und durch welche andererseits über Fenster erfolgende Wärmeverluste auf ein Minimum reduzierbar sind.

Diese Aufgabe wird erfindungsgemäß durch das in Patentanspruch 1 beanspruchte Hausdach gelöst.

Das erfindungsgemäße Hausdach weist ein Dachfenster und einen schwenkbaren Deckel auf, wobei der Deckel derart angeordnet und schwenkbar ist, daß er im nach unten geschwenkten Zustand von außen über dem Dachfenster zu liegen kommt, und vom Dachfenster weg nach oben schwenkbar ist.

Ein solcher Deckel kann sowohl als Wärmedämmelement, als auch als Lichtreflektor, als auch als Schattenspender verwendet werden, wobei es ausschließlich von der jeweiligen Stellung des Deckels abhängt, welche Funktion er gerade innehat. Durch die Verwendung eines solchen Deckels kann erreicht werden, daß die vorhandene Sonneneinstrahlung optimal genutzt wird, und daß aber andererseits über das Dachfenster nur so viel Wärme in das Haus bzw. aus dem Haus gelangen kann wie es zur Erzielung oder Aufrechterhaltung der von den Hausbenutzern gewünschten Temperatur erforderlich oder akzeptabel ist.

Vorteilhafte Weiterbildungen der Erfindung sind den Unteransprüchen, der folgenden Beschreibung, und den Figuren entnehmbar.

Die Erfindung wird nachfolgend anhand eines Ausführungsbeispiels unter Bezugnahme auf die Figuren näher erläutert. Es zeigen
- Figur 1: eine perspektivische Ansicht eines Hauses mit einem im folgenden näher beschriebenen Dach,
- Figur 2: eine Seitenansicht eines ein Dachfenster und einen schwenkbaren Deckel enthaltenden Teils des Daches des Hauses gemäß Figur 1.

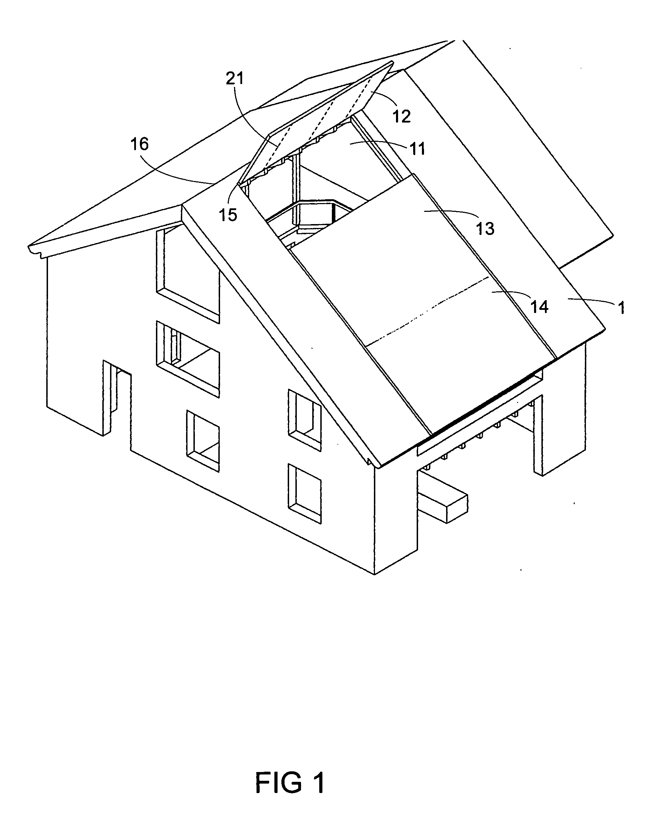

Das in der Figur 1 gezeigte Haus weist ein Dach 1 auf, mit einem Dachfenster 11, einem schwenkbaren Deckel 12, einer unterhalb des Dachfensters 11 angeordneten Solar-Anlage 13, und einer unterhalb der Solar-Anlage 13 angeordneten Photovoltaik-Anlage 14.

Das Dachfenster 11 wird im betrachteten Beispiel durch eine feststehende Verglasung gebildet. Es könnte sich aber auch im ein öffenbares Fenster handeln.

Der Deckel 12 ist im betrachteten Beispiel eine zusammenhängende Einheit, die um eine am Dach 1 oder am Dachfenster 11 befestigte Achse 15 schwenkbar ist. Diese Achse 15 ist im betrachteten Beispiel oberhalb des Dachfensters 11, genauer gesagt zwischen dem Dachfenster 11 und dem Dachfirst 16 angeordnet und verläuft im betrachteten Beispiel parallel zum Dachfirst 16. Die Achse 15 könnte aber auch unterhalb der des Dachfensters 11 angeordnet sein, oder seitlich neben dem Dachfenster 11 (und senkrecht zum Dachfirst 16 verlaufen). Die Anordnung der Achse 15 wird insbesondere abhängig von der Lage des Hauses und des Dachfensters 11 festgelegt.

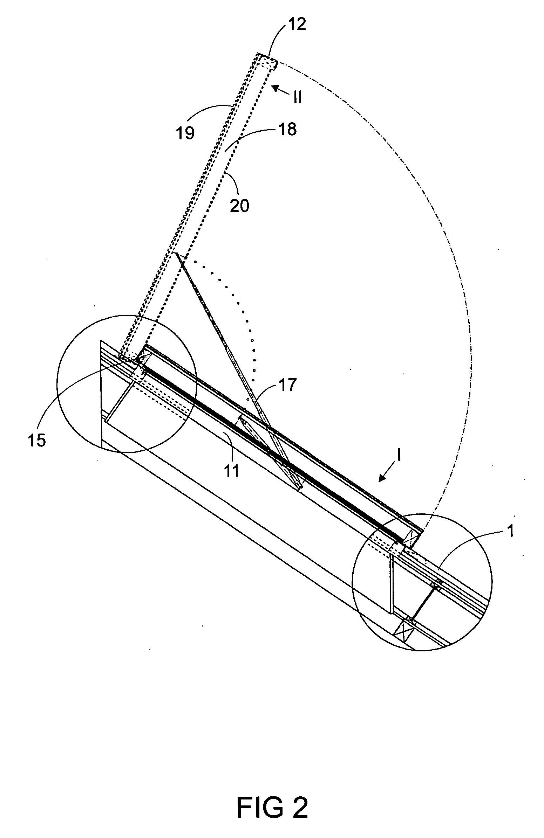

Der Deckel 12 ist durch einen Schwenkmechanismus nach oben und unten schwenkbar. Der Schwenkmechanismus besteht bei der in der Figur 2 gezeigten Ausführungsform aus einer Teleskopstange 17, deren eines Ende über ein Gelenk am Dach 1 oder am Dachfenster 11 befestigt ist, und deren anderes Ende über ein zweites Gelenk am Deckel 12 befestigt ist. Die Teleskopstange 17 ist durch einen elektrischen, pneumatischen, hydraulischen, oder manuellen Antrieb ausfahrbar und zusammenziehbar. Wie aus der Figur 2 ersichtlich ist, ist der Deckel 12 im zusammengeschobenen Zustand der Teleskopstange 17 nach unten geschwenkt, und im ausgefahrenen Zustand der Teleskopstange 17 nach oben geschwenkt. Die Figur 2 zeigt zwei Stellungen des Deckels 12, genauer gesagt eine erste Stellung I, in welcher der Deckel 12 maximal weit nach unten geschwenkt ist, und eine zweite Stellung II, in welcher der Deckel 12 maximal weit nach oben geschwenkt ist. Der Deckel 12 kann vorzugsweise auch in beliebigen Zwischenstellungen zwischen den Stellungen I und II gehalten werden. Der Vollständigkeit halber sei angemerkt, daß die maximal nach oben geschwenkte Stellung des Deckels 12 nicht die in der Figur 2 gezeigte Stellung II sein muß. Der Deckel 12 könnte in der maximal nach oben geschwenkten Stellung auch steiler oder flacher stehen als es in der Figur 2 dargestellt ist.

Es dürfte einleuchten und bedarf keiner näheren Erläuterung, daß der Schwenkmechanismus auch durch eine beliebige andere Vorrichtung gebildet werden kann, die in der Lage ist, den Deckel 12 zwischen den Stellungen I und II hin- und herzuschwenken.

Beispielsweise könnte der Schwenkmechanismus auch eine nicht ausziehbare Stange umfassen, deren eines Ende über ein Gelenk am Dach 1 oder am Dachfenster 11 befestigt ist, und deren anderes Ende über ein zweites Gelenk mit einer im oder am Deckel 12 vorgesehenen Antriebsvorrichtung verbunden ist, durch welche das betreffende Ende der Stange quer zur Achse 15 parallel zum Deckel 12 verschiebbar ist. Die Antriebsvorrichtung kann beispielsweise einen Elektromotor, eine vom Elektromotor um die Längsachse drehbare und rechtwinklig zur Achse 15 sowie parallel zum Deckel 12 verlaufende Spindel, und einen auf die Spindel aufgeschraubten und über das zweite Gelenk mit dem Ende der Stange verbundenen Schlitten umfassen. Bei eingeschaltetem Elektromotor wird das mit dem Schlitten verbundene Ende der Stange über die sich drehende Spindel und den sich dadurch längs der Spindel bewegenden Schlitten bewegt, was - je nach Laufrichtung des Motors - ein Anheben oder Absenken des Deckels 12 zur Folge hat.

Die Antriebsvorrichtung könnte auch im oder am Dach 1 vorgesehen und mit dem einen Ende der Stange verbunden sein.

Im nach unten geschwenkten Zustand des Deckels 12 kommt dieser mit geringem Abstand über dem Dachfenster 11 zu liegen. Der Deckel 12, das Dachfenster 11, und/oder das Dach 1 sind vorzugsweise derart ausgebildet, daß der zwischen dem Deckel 12 und dem Dachfenster 11 liegende Bereich beispielsweise über Fälze und/oder Dichtbänder nach außen hin luftdicht abgeschlossen ist. Der Deckel 12 ist größer als das Dachfenster 11 und bedeckt dieses im nach unten geschwenkten Zustand des Deckels 12 vollständig.

Die dem Dachfenster 11 zugewandte Unterseite des Deckels 12 ist so beschaffen, daß sie gute Lichtreflektionseigenschaften aufweist. D.h., sie weist entweder eine helle (vorzugsweise weiße) Oberfläche auf, oder wird durch eine aus spiegelndem Material bestehende oder mit spiegelndem Material beschichtete Platte gebildet, oder wird durch einen Spiegel gebildet, wobei als spiegelnde Materialien Metalle wie beispielsweise Aluminium oder Edelstahl verwendet werden können. Im betrachteten Beispiel wird die Unterseite des Deckels 12 durch eine hochreflektierende Aluminiumplatte mit einem Reflexionsgrad von ca. 94% gebildet, wobei hierauf jedoch keine Einschränkung besteht.

Der Deckel 12 weist vorzugsweise gute Wärmedämmeigenschaften auf. Im betrachteten Beispiel weist der Deckel 12 eine die Oberseite des Deckels bildende erste Platte 19, eine die Unterseite des Deckels bildende zweite Platte 20, und eine zwischen diesen Platten vorgesehene gut wärmedämmende Füllung 18 auf. Die erste Platte 19 bildet die Dachhaut und besteht beispielsweise aus Titanzink. Die Füllung 18 wird im betrachteten Beispiel durch PUR-Schaum gebildet. Die Füllung könnte jedoch auch durch beliebige andere Materialien mit guten Wärmedämmeigenschaften gebildet werden, beispielsweise durch PU-Schaum, geschäumtes Polystyrol (Styropor), etc. Die zweite Platte 20 ist, wie vorstehend bereits erwähnt wurde, im betrachteten Beispiel ein spiegelndes Alublech. Die Platte 20 ist im betrachteten Beispiel auf die Füllung 18 aufgeklebt, könnte aber auch auf beliebige andere Art und Weise befestigt werden.

Im Gegensatz zum Deckel 12 weist das Dachfenster 11 vorzugsweise keine optimalen Wärmedämmeigenschaften auf. Insbesondere weist das Dachfenster 11 vorzugsweise schlechtere Wärmedämmeigenschaften als die restlichen Fenster des Hauses auf. Im betrachteten Beispiel wird für das Dachfenster 11 nur eine Zweischeiben-Verglasung verwendet. Dies erweist sich in zweifacher Hinsicht als vorteilhaft: einerseits sind solche Fenster billiger als die zumindest in Passivhäusern üblicherweise verwendeten Dreischeiben-Verglasungen, und andererseits kann bei Bedarf durch Hochschwenken des Deckels 12 über das Dachfenster eine schnellere Erwärmung oder Abkühlung des Hauses erfolgen als es beispielsweise bei einer Dreischeiben-Verglasung der Fall wäre. Diese Vorteile müssen nicht durch die Inkaufnahme von Nachteilen erkauft werden. Insbesondere kann eine zu starke Erwärmung oder Abkühlung des Hauses durch ein Herunterschwenken des Deckels 12 verhindert werden; die aus dem Dachfenster 11 und dem heruntergeschwenkten Deckel 12 bestehende Kombination weist bessere Wärmedämmeigenschaften auf als eine Dreischeiben-Verglasung (ohne Deckel 12).

Der Deckel 12 hat je nach seiner Stellung verschiedene Funktionen: er kann als Wärmedämmelement, als Lichtreflektor, oder als Schattenspender verwendet werden.

Der Deckel 12 hat die Funktion eines Wärmedämmelementes, wenn er ganz nach unten geschwenkt ist. In dieser Stellung des Deckels 12 kann aufgrund der guten Wärmedämmeigenschaften des Deckels 12 und aufgrund der luftdichten Abdichtung des zwischen dem Dachfenster 11 und dem Deckel 12 liegenden Bereiches keine oder nur in einem sehr geringen Umfang Wärme oder Kälte aus dem Haus entweichen oder in das Haus gelangen. Der Deckel 12 wird als Wärmedämmelement benutzt,
- wenn es im Haus nicht wärmer ist als es von den Hausbewohnern gewünscht wird, und ein Hochschwenken des Deckels zur Folge hätte, daß über das Dachfenster 11 Wärme aus dem Haus entweicht, oder
- wenn es im Haus nicht kühler ist als es von den Hausbewohnern gewünscht wird, und ein Hochschwenken des Deckels zur Folge hätte, daß über das Dachfenster 11 Wärme in das Haus gelangt.

Der Deckel 12 hat die Funktion eines Lichtreflektors, wenn er so weit hochgeschwenkt ist, daß er, genauer gesagt seine Licht reflektierende Unterseite über das Dachfenster 11 Sonnenlicht in das Haus reflektiert, und/oder Sonnenlicht auf die Solar-Anlage 13 und/oder die Photovoltaik-Anlage 14 reflektiert. Wie weit der Deckel 12 hierzu hochgeschwenkt werden muß, hängt vom Stand der Sonne und der Neigung des Daches 12 ab. Der Deckel 12 wird als Lichtreflektor benutzt,
- wenn es im Haus kühler ist als es von den Hausbewohnern gewünscht wird, und die Verwendung des Deckels als Lichtreflektor eine Erwärmung des Hauses bewirkt, und/oder
- wenn sich dadurch die Solar-Anlage 13 und/oder die Photovoltaik-Anlage 14 effizienter betreiben lassen, und es gleichzeitig aufgrund der über das Dachfenster 11 ins Haus oder aus dem Haus gelangenden Wärme im Haus nicht oder jedenfalls nicht erheblich wärmer oder kühler wird als es von den Hausbewohnern gewünscht wird.

Der Deckel 12 hat die Funktion eines Schattenspenders, wenn er so weit hochgeschwenkt ist, daß er zwischen der Sonne und dem Dachfenster zu liegen kommt und somit den direkten Einfall von Sonnenlicht über das Dachfenster 11 in das Haus verhindert oder einschränkt. Der Deckel 12 wird als Schattenspender benutzt, wenn über das Dachfenster 11 Licht ins Haus gelangen soll, und es gleichzeitig aufgrund der über das Dachfenster 11 ins Haus oder aus dem Haus gelangenden Wärme im Haus nicht oder jedenfalls nicht erheblich wärmer oder kühler wird als es von den Hausbewohnern gewünscht wird.

Die Einstellung der Stellung des Deckels 12 erfolgt vorzugsweise automatisch durch eine Steuereinrichtung. Diese kann anhand von innerhalb und/oder außerhalb des Hauses vorgesehenen Temperatursensoren, Helligkeitssensoren, und gegebenenfalls unter zusätzlicher Berücksichtigung der Tageszeit und des Datums die optimale Stellung des Deckels 12 ermitteln und den Deckel in die ermittelte Stellung schwenken.

Unabhängig hiervon erweist sich als vorteilhaft, wenn Sensoren vorhanden sind, die die Windgeschwindigkeit und/oder die Windrichtung ermitteln, und der Deckel bei zu hoher Windgeschwindigkeit oder ungünstiger Windrichtung automatisch ganz oder teilweise nach unten geschwenkt wird.

Es kann sich ferner als vorteilhaft erweisen, wenn Sensoren vorhanden sind, die Niederschläge wie Regen, Schnee und Hagel erfassen, und der Deckel in Abhängigkeit hiervon automatisch ganz oder teilweise nach unten geschwenkt wird.

Darüber hinaus kann es sich als vorteilhaft erweisen, wenn die Achse 15 relativ zum Dach 1 verschoben werden kann, beispielsweise wenn die Achse auf einem parallel zum Dach 1 montierten und um seine Achse drehbaren Drehteller angeordnet ist, oder wenn die Achse 15 entlang von auf dem Dach montierten Schienen verschoben werden kann.

Es kann sich ferner als vorteilhaft erweisen, wenn anstelle einer einzigen starr montierten Platte 20 mehrere mit geringem gegenseitigen Abstand neben- und/oder übereinander angeordnete bewegliche Platten vorgesehen werden. Beispielsweise kann vorgesehen werden,
- unterhalb der Füllung 18 senkrecht zur Achse 15 und parallel zur Füllung 18 verlaufende, und durch eine geeignete Antriebsvorrichtung um ihre Längsachse drehbare Wellen 21 anzuordnen, und
- mehrere kleine Platten bzw. Lamellen 20 auf diesen Wellen 21 zu montieren (so daß die Wellen 21 zwischen der Füllung 18 und den Platten 20 zu liegen kommen und die Platten bzw. Lamellen 20 durch eine entsprechende Drehbewegung der Wellen 21 um die Längsachse derselben schwenkbar sind.

Das Dachfenster 11 ist im betrachteten Beispiel in einem schräg verlaufenden Teil des Daches angeordnet. Es könnte aber auch um ein Dachfenster eines Flachdaches handeln.

Der beschriebene Deckel 12 erweist sich unabhängig von den Einzelheiten der praktischen Realisierung in mehrfacher Hinsicht als vorteilhaft. Er ermöglicht es, daß die vorhandene Sonneneinstrahlung optimal genutzt werden kann, und kann andererseits dafür sorgen, daß im Haus stets die von den Hausbewohnern gewünschte Temperatur herrscht.

Darüber hinaus schützt der Deckel 12 das Dachfenster 11 vor Beschädigungen, beispielsweise vor Beschädigungen durch Hagel, und sorgt für einen besseren Schallschutz und eine bessere Lichtqualität im Haus.

### Bezugszeichenliste

- 1: Dach
- 11: Dachfenster
- 12: Deckel
- 13: Solar-Anlage
- 14: Photovoltaik-Anlage
- 15: Achse
- 16: Dachfirst
- 17: Teleskopstange
- 18: wärmedämmende Füllung
- 19: Oberseite von 12 bildende Platte
- 20: Unterseite von 12 bildende Platte
- 21: Welle

- I: 12 in nach unten geschwenkter Stellung
- II: 12 in nach oben geschwenkter Stellung

## Patentansprüche

1. Hausdach mit einem Dachfenster,
**gekennzeichnet durch**
einen schwenkbaren Deckel (12), welcher derart angeordnet und schwenkbar ist, daß er im nach unten geschwenkten Zustand von außen über dem Dachfenster (11) zu liegen kommt, und vom Dachfenster (11) weg nach oben schwenkbar ist.

2. Hausdach nach Anspruch 1,
**dadurch gekennzeichnet,**
**daß** der Deckel durch eine zusammenhängende Einheit gebildet wird.

3. Hausdach nach Anspruch 1,
**dadurch gekennzeichnet,**
**daß** der Deckel (12) im nach unten geschwenkten Zustand das Dachfenster (11) vollständig bedeckt.

4. Hausdach nach Anspruch 1,
**dadurch gekennzeichnet,**
**daß** der Deckel (12) im nach unten geschwenkten Zustand mit Abstand über dem Dachfenster (11) zu liegen kommt.

5. Hausdach nach Anspruch 4,
**dadurch gekennzeichnet,**
**daß** der Deckel (12), das Dachfenster (11), und/oder das Dach (1) derart ausgebildet sind, daß der zwischen dem Deckel (12) und dem Dachfenster (11) liegende Bereich im nach unten geschwenkten Zustand des Deckels (12) über Fälze und/oder Dichtungsbänder nach außen hin luftdicht abgeschlossen ist.

6. Hausdach nach Anspruch 1,
**dadurch gekennzeichnet,**
**daß** die dem Dachfenster (11) zugewandte Unterseite des Deckels (12) so ausgebildet ist, daß sie darauf auftreffendes Licht im wesentlichen vollständig reflektiert.

7. Hausdach nach Anspruch 6,
**dadurch gekennzeichnet,**
**daß** die Unterseite des Deckels (12) eine helle oder eine spiegelnde Oberfläche aufweist.

8. Hausdach nach Anspruch 7,
**dadurch gekennzeichnet,**
**daß** die Unterseite des Deckels (12) weiß ist.

9. Hausdach nach Anspruch 7,
**dadurch gekennzeichnet,**
**daß** die Unterseite des Deckels (12) aus Metall besteht oder mit Metall beschichtet ist.

10. Hausdach nach Anspruch 9,
**dadurch gekennzeichnet,**
**daß** die Unterseite des Deckels (12) aus Aluminium besteht oder mit Aluminium beschichtet ist.

11. Hausdach nach Anspruch 9,
**dadurch gekennzeichnet,**
**daß** die Unterseite des Deckels (12) aus Edelstahl besteht oder mit Edelstahl beschichtet ist.

12. Hausdach nach Anspruch 7,
**dadurch gekennzeichnet,**
**daß** die Unterseite des Deckels (12) durch einen Spiegel gebildet wird.

13. Hausdach nach Anspruch 1,
**dadurch gekennzeichnet,**
**daß** der Deckel (12) gute wärmedämmende Eigenschaften aufweist.

14. Hausdach nach Anspruch 13,
**dadurch gekennzeichnet,**
**daß** der Deckel (12) die Oberseite und die Unterseite des Deckels bildende Platten (19, 20) aufweist, und daß sich zwischen diesen Platten ein gut wärmedämmendes Material (18) befindet.

15. Hausdach nach Anspruch 14,
**dadurch gekennzeichnet,**
**daß** die die Unterseite des Deckels (12) bildende Platte (20) durch eine einzige, nur zusammen mit dem gesamten Deckel bewegbare Platte gebildet wird.

16. Hausdach nach Anspruch 14,
**dadurch gekennzeichnet,**
**daß** die Unterseite des Deckels (12) durch eine Vielzahl von neben- und/oder übereinander angeordnete Platten gebildet wird, die um eine senkrecht zur Schwenkachse (15) des Deckels verlaufende und um ihre Länsachse drehbare Welle (21) schwenkbar sind.

17. Hausdach nach Anspruch 14,
**dadurch gekennzeichnet,**
**daß** das wärmedämmende Material (18) durch einen PUR-Schaum gebildet wird.

18. Hausdach nach Anspruch 14,
**dadurch gekennzeichnet,**
**daß** das wärmedämmende Material (18) durch einen PU-Schaum gebildet wird.

19. Hausdach nach Anspruch 14,
**dadurch gekennzeichnet,**
**daß** das wärmedämmende Material (18) durch geschäumtes Polystyrol gebildet wird.

20. Hausdach nach Anspruch 1,
**dadurch gekennzeichnet,**
**daß** zum Schwenken des Deckels (12) ein Schwenkmechanismus vorgesehen ist, wobei der Schwenkmechanismus durch eine elektrisch, pneumatisch, hydraulisch, oder manuell ausfahbare und zusammenschiebbare Teleskopstange (17) gebildet wird, deren eines Ende am Dach (1) oder Dachfenster (11) befestigt ist, und deren anderes Ende am Deckel (12) befestigt ist.

21. Hausdach nach Anspruch 1,
**dadurch gekennzeichnet,**
**daß** zum Schwenken des Deckels (12) ein Schwenkmechanismus vorgesehen ist,
- wobei der Schwenkmechanismus eine Stange und eine Antriebsvorrichtung umfaßt,
- wobei das eine Ende der Stange am Dach (1) oder am Dachfenster (11) befestigt ist, und das andere Ende der Stange mit der Antriebsvorrichtung verbunden ist, und
- wobei die Antriebsvorrichtung im oder am Deckel (12) vorgesehen ist und das mit der Antriebsvorrichtung verbundene Ende der Stange quer zur Schwenkachse (15) des Decksls (12) parallel zum Deckel (12) verschiebt.

22. Hausdach nach Anspruch 20,
**dadurch gekennzeichnet,**
**daß** die Antriebsvorrichtung einen Elektromotor, eine vom Elektromotor um die Längsachse drehbare und rechtwinklig zur Achse 15 sowie parallel zum Deckel 12 verlaufende Spindel, und einen auf die Spindel aufgeschraubten und mit dem Ende der Stange verbundenen Schlitten umfaßt.

23. Hausdach nach Anspruch 1,
**dadurch gekennzeichnet,**
**daß** der Deckel (12) in eine Stellung bringbar ist, in welcher er als Wärmedämmelement wirkt.

24. Hausdach nach Anspruch 23,
**dadurch gekennzeichnet,**
**daß** die Stellung, in welcher der Deckel (12) als Wärmedämmelement wirkt, die vollständig nach unten geschwenkte Stellung des Deckels (12) ist.

25. Hausdach nach Anspruch 23,
**dadurch gekennzeichnet,**
**daß** eine Steuereinrichtung vorgesehen ist, die den Deckel (12) automatisch in die Stellung bringt, in welcher er als Wärmedämmelement wirkt,
- wenn es im Haus nicht wärmer ist als es von den Hausbewohnern gewünscht wird, und ein Hochschwenken des Deckels (12) zur Folge hätte, daß über das Dachfenster (11) Wärme aus dem Haus entweicht, oder
- wenn es im Haus nicht kühler ist als es von den Hausbewohnern gewünscht wird, und ein Hochschwenken des Deckels (12) zur Folge hätte, daß über das Dachfenster (11) Wärme in das Haus gelangt.

26. Hausdach nach Anspruch 1,
**dadurch gekennzeichnet,**
**daß** der Deckel (12) in eine Stellung bringbar ist, in welcher er als Lichtreflektor wirkt.

27. Hausdach nach Anspruch 26,
**dadurch gekennzeichnet,**
**daß** die Stellung, in welcher der Deckel (12) als Lichtreflektor wirkt, eine Stellung ist,
- in welcher der Deckel (12) so weit hochgeschwenkt ist, daß die Unterseite des Deckels (12) über das Dachfenster (11) Sonnenlicht ins Haus reflektiert, oder
- in welcher der Deckel (12) so weit hochgeschwenkt ist, daß die Unterseite des Deckels (12) Sonnenlicht auf eine auf dem Dach (1) vorgesehene Solar-Anlage (13) oder eine auf dem Dach (1) vorgesehene Photovoltaik-Anlage (14) reflektiert.

28. Hausdach nach Anspruch 26,
**dadurch gekennzeichnet,**
**daß** eine Steuereinrichtung vorgesehen ist, die den Deckel (12) automatisch in die Stellung bringt, in welcher er als Lichtreflektor wirkt,
- wenn es im Haus kühler ist als es von den Hausbewohnern gewünscht wird, und die Verwendung des Deckels (12) als Lichtreflektor eine Erwärmung des Hauses bewirkt, und/oder
- wenn sich dadurch eine auf dem Dach (1) vorgesehene Solar-Anlage (13) und/oder eine auf dem Dach (1) vorgesehene Photovoltaik-Anlage (14) effizienter betreiben lassen, und es gleichzeitig aufgrund der über das Dachfenster (11) ins Haus oder aus dem Haus gelangenden Wärme im Haus nicht oder jedenfalls nicht erheblich wärmer oder kühler wird als es von den Hausbewohnern gewünscht wird.

29. Hausdach nach Anspruch 1,
**dadurch gekennzeichnet,**
**daß** der Deckel (12) in eine Stellung bringbar ist, in welcher er als Schattenspender wirkt.

30. Hausdach nach Anspruch 29,
**dadurch gekennzeichnet,**
**daß** die Stellung, in welcher der Deckel (12) als Schattenspender wirkt, eine Stellung ist, in der der Deckel (12) so weit hochgeschwenkt ist, daß er zwischen der Sonne und dem Dachfenster (11) zu liegen kommt und somit den direkten Einfall von Sonnenlicht über das Dachfenster (11) in das Haus verhindert oder einschränkt.

31. Hausdach nach Anspruch 29,
**dadurch gekennzeichnet,**
**daß** eine Steuereinrichtung vorgesehen ist, die den Deckel (12) automatisch in die Stellung bringt, in welcher er als Schattenspender wirkt, wenn über das Dachfenster (11) Licht ins Haus gelangen soll, und es gleichzeitig aufgrund der über das Dachfenster (11) ins Haus oder aus dem Haus gelangenden Wärme im Haus nicht oder jedenfalls nicht erheblich wärmer oder kühler wird als es von den Hausbewohnern gewünscht wird.

32. Hausdach nach Anspruch 1,
**dadurch gekennzeichnet,**
**daß** Mittel vorgesehen sind, durch welche es möglich ist, die Achse (15), um welche der Deckel (12) schwenkbar ist, relativ zum Dach (1) zu verschieben.

33. Hausdach nach Anspruch 1,
**dadurch gekennzeichnet,**
**daß** das Dachfenster (11) Wärmedämmeigenschaften aufweist, die schlechter sind als die Wärmedämmeigenschaften der restlichen Fenster des das Hausdach (1) aufweisenden Hauses.
